**Europäisches Patentamt**

**European Patent Office**

**Office européen des brevets**

(19)

(11) Veröffentlichungsnummer: **0 021 037**
A1

# EUROPÄISCHE PATENTANMELDUNG

(12)

(21) Anmeldenummer: **80102805.1**

(22) Anmeldetag: **21.05.80**

(51) Int. Cl.³: **G 01 M 1/28,** G 01 M 1/08

(30) Priorität: **09.06.79 DE 2923489**
**14.07.79 DE 2928561**

(43) Veröffentlichungstag der Anmeldung: **07.01.81**
**Patentblatt 81/1**

(84) Benannte Vertragsstaaten: **AT FR IT**

(71) Anmelder: **Hatlapa, Rolf, Theodor-Storm-Allee 24b,**
**D-2082 Uetersen (DE)**

(72) Erfinder: **Hatlapa, Rolf, Theodor-Storm-Allee 24b,**
**D-2082 Uetersen (DE)**
Erfinder: **Rosenburg, Rüdiger, Ziegeleiweg 4,**
**D-2181 Appen-Unterglinde (DE)**

(74) Vertreter: **Hansmann, Dierk, Jessenstrasse 4,**
**D-2000 Hamburg 50 (DE)**

(54) **Anordnung zur Anzeige und zum Einstellen von Ausgleichsgewichten.**

(57) Bei dieser Anordnung sind Ausgleichsgewichte (3) in Nuten (2) verschiebbar und festsetzbar in der Felge (1) des Rades angeordnet, um durch Verschiebung der Ausgleichsgewichte (3) eine Neueinstellung mit den gleichen Ausgleichsgewichten (3) vornehmen zu können. Die Einstellung wird dabei mittels einer Unwuchtanzeigevorrichtung (5) am Rad vorgenommen, die die Unwucht über Beschleunigungsaufnehmer (6, 7) feststellt und über eine elektronische Auswerteschaltung die Einstellpunkte für die Ausgleichsgewichte (3) über Lichtdioden (27) kennzeichnet.

Anordnung zur Anzeige und zum Einstellen von Ausgleichsgewichten.

Die Erfindung bezieht sich auf eine Anordnung zur Anzeige und zum Einstellen von Ausgleichsgewichten zur Beseitigung von Unwuchten an Fahrzeugrädern, insbesondere für Räder von Kraftfahrzeugen, wobei jede Fahrzeugfelge mindestens eine umlaufende Nut zur Aufnahme feststellbaren Ausgleichsgewichten aufweist.

Es ist bekannt, zur Beseitigung von Unwuchten an Fahrzeugrädern die Felge mit sogenannten Ausgleichsgewichten zu versehen. Hierbei werden die Gewichte an dem äußeren Felgenrand festgesetzt, und die Gewichte sind als Verbrauchselemente für eine erneute Einstellung nicht mehr zu verwenden. Dieses ist ein erheblicher Mangel, da es nach dem heutigen Stand der Technik üblich ist, Räder ohne Antriebselemente direkt am Fahrzeug mit entsprechenden Ausgleichsgewichten zu versehen. Darüber hinaus ist es oftmals schon nach relativ kleinen Fahrstrecken erforderlich, eine Wiederholung des Auswuchtvorganges durchzuführen. Das Problem bei derartigen Anordnungen besteht auch darin, daß es für die Durchführung des Einstellvorganges bzw. der Korrektur erforderlich ist, eine Werkstatt aufzusuchen. Diese Maßnahmen sind somit relativ aufwendig und die Durchführung der Einstellung ist damit von dem Fachmann abhängig und kann normalerweise nicht selbst durchgeführt werden.

Die Aufgabe der Erfindung ist es, eine einfache Anordnung zu schaffen, die bei einer Neueinstellung eine Wiederverwendung der Gewichte gewährleistet und dabei auch eine Einstellung ohne Demontage der Räder ermöglicht, sowie die Einstellung ohne Werkstatthilfe

- 2 -

- 2 -

0021037

mit geringem Aufwand durchführbar ist.

Die Lösung dieser Aufgabe erfolgt erfindungsgemäß dadurch, daß jede umlaufende Nut in axialer Richtung der Fahrzeugfelge am Felgenaußenrand angeordnet ist und jeweils mindestens zwei Ausgleichsgewichte in einer Nut verschiebbar angeordnet und mit einer Feststellvorrichtung versehen sind, wobei eine Unwuchtanzeigevorrichtung der Fahrzeugfelge derart zugeordnet ist, daß über Beschleunigungsaufnehmer in Abhängigkeit von einer Unwucht ein Meßsignal der Anzeigevorrichtung zuführbar ist und die Ausgleichsgewichte entsprechend nachführbar sind.

Hierdurch wird auf einfache Weise ermöglicht, die wiederholte Einstellung mit den gleichen Gewichten vorzunehmen. Dabei ist es möglich, die Sollposition der Ausgleichsgewichte durch die Anzeigevorrichtung anzugeben und somit auch für einen Nichtfachmann eine Korrektur der aufgetretenen Unwucht ohne Demontage der Räder durchzuführen.

Eine Ausbildung der Anzeigevorrichtung besteht erfindungsgemäß darin, daß zwei an einer Felge um 90° zueinander versetzt und mit gleichem Achsabstand angeordnete richtungsempfindliche Beschleunigungsaufnehmer in Abhängigkeit von einer Unwucht ein positives bzw. negatives elektrisches Meßsignal erzeugen, welche zur Ermittlung und Anzeige von Größe und Richtung der aufgetretenen Unwucht einer Auswertschaltung zugeführt sind.

Eine konkrete Ausgestaltung der Erfindung wird dadurch geschaffen, daß die Meßsignale der zwei Beschleunigungsaufnehmer über je einen Verstärker jeweils zwei nachgeschalteten Signalaufbereitungsstufen zugeführt sind

- 3 -

0021037

und daß die in den Signalaufbereitungsstufen ermittelten Amplituden und Phasenlagen der Meßsignale als Eingangssignale einem Vierquadrantenmultiplizierer zugeführt sind.

Zur Aufbereitung der Ausgangsinformationen wird vorgeschlagen, daß der Vierquadrantenmultiplizierer ein resultierendes Ausgangssignal nach Größe und Richtung aus den vier von den Meßsignalen abgeleiteten Eingangssignalen ermittelt und dieses Ausgangssignal einem programmierbaren Rechenwerk vorzugsweise einem Mikroprozessor zuführt, welches aus dem zugeführten Signal eine Ausgangsinformation für zwei Ausgleichsgewichte nach Größe und Richtung errechnet.

Es ist weiterhin vorgesehen, daß die Ausgangsinformation des Rechenwerkes über eine Torschaltung einer Leuchtdiodenanzeigevorrichtung zugeführt ist.

Zur Vermeidung von Fehlinformationen ist vorgesehen, daß das Rechenwerk und die Torschaltung durch eine Koinzidenzstufe getaktet werden, die eingangsseitig mit Signalen der Referenzfrequenz und den Meßsignalen der Beschleunigungsaufnehmer versorgt ist.

Um die Gebrauchsfähigkeit bzw. Praktikabilität der Vorrichtung zu erhöhen, wird vorgeschlagen, daß der Leuchtdiodenanzeigevorrichtung eingangsseitig eine sogenannte "Sample and Hold"-Schaltung zur Sicherung der Anzeige auch während des Radstillstandes zugeordnet ist.

Eine einfache Ausbildung als Meßwertgeber wird dadurch geschaffen, daß für die Beschleunigungsaufnehmer Piezzokristalle eingesetzt sind. Alternativ wird vorgeschlagen, daß für die Beschleunigungsaufnehmer zwei

0021037

auf einem in der Radachse rotierenden Federstab angeordnete Dehnungsmeßstreifen vorgesehen sind.

Um für die Energieversorgung den Aufwand am umlaufenden Teil relativ klein zu halten und einen Anschluß
an die vorhandene Energieversorgung zu gewährleisten,
ist vorgesehen, daß zur Energieversorgung ein primärseitig mit Wechselstrom versorgter Drehtransformator
vorgesehen ist, dessen Sekundärseite über eine Aufbereitungsstufe (Gleichrichter) und einen Regler die
Versorgung gewährleistet.

Eine vorteilhafte Anordnung ergibt sich dadurch, daß
die Energieversorgung über eine Pufferbatterie erfolgt.
Hierdurch wird auch im Stillstand des Rades eine Stromversorgung der Anzeige gewährleistet.

In der Zeichnung ist ein Ausführungsbeispiel gemäß
der Erfindung schematisch dargestellt. Es zeigen:

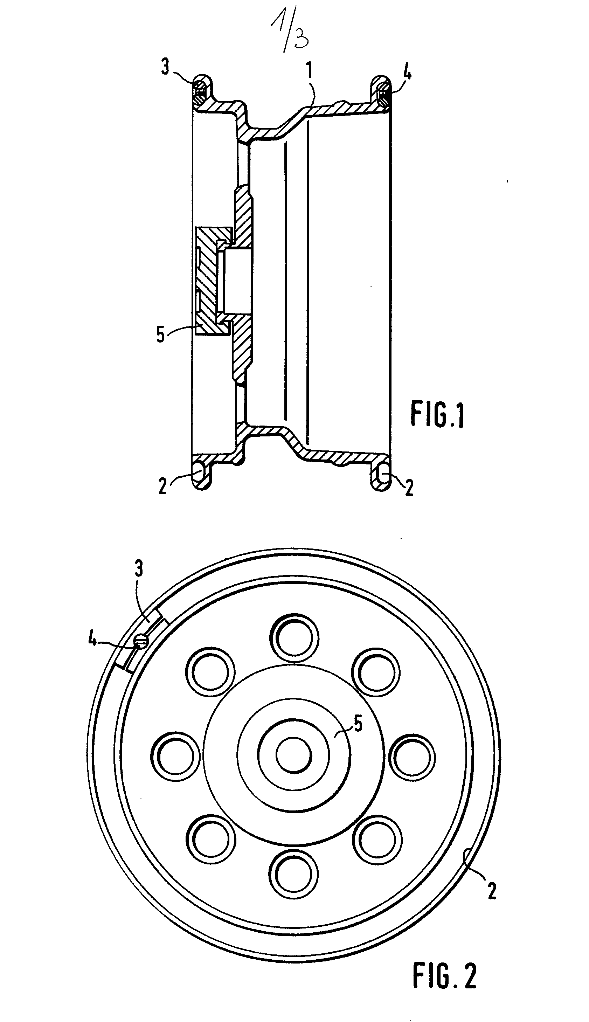

Fig. 1    einen Schnitt durch eine Felge,

Fig. 2    eine Seitenansicht einer Felge,

Fig. 3    ein Fahrzeugrad mit einer in der
          Radnabe angeordneten Unwuchtanzeigevorrichtung,

Fig. 4    ein vereinfachtes Blockschaltbild
          der Auswerteschaltung   und

Fig. 5    ein in einer Radachse angeordneter
          und mit Dehnungsmeßstreifen ver-
          sehener Federstab.

0021037

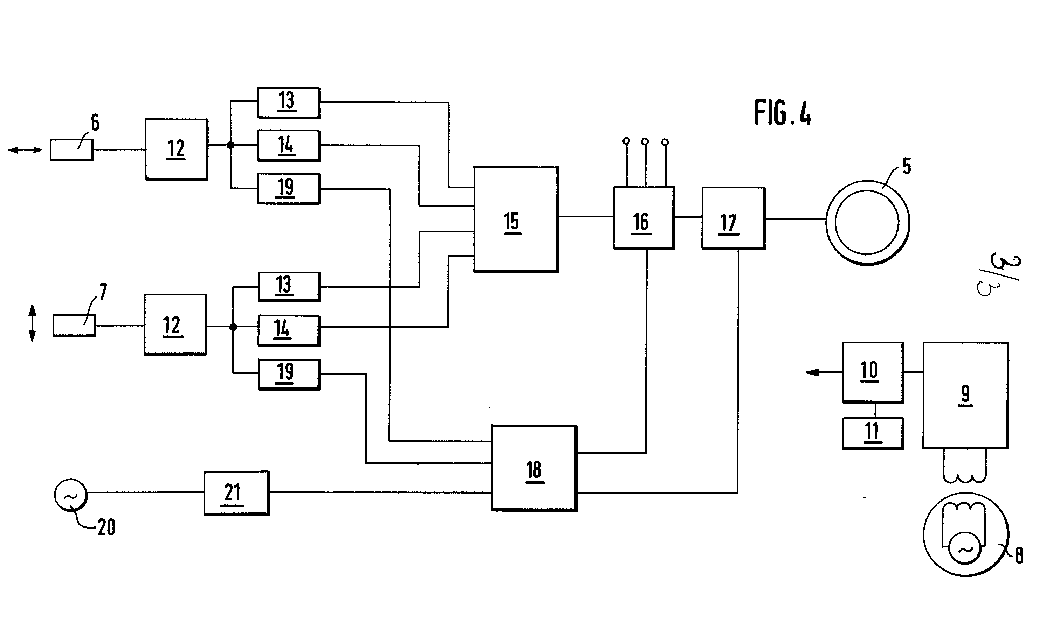

Die dargestellte Felge 1 besitzt konzentrisch zur Nabe eine umlaufende Nut 2 in die festklemmbare Ausgleichsgewichte 3 eingesetzt sind. Hierzu sind die Ausgleichsgewichte 3 mit Klemmschrauben 4 versehen. In der Nabe ist eine konzentrisch liegende Ringanzeigevorrichtung 5 angeordnet. Weiterhin ist die Nabe mit zwei um 90° zueinander versetzt und gleichen Achsabstand aufweisenden Beschleunigungsaufnehmern 6,7 versehen, die in diesem Falle als Piezzokristalle ausgebildet sind. Außerdem sind in der Nabe noch zahlreiche Schaltstufen untergebracht, deren Aufbau und Funktion im Zusammenhang mit Fig. 4 erläutert werden. Zur Versorgung der Schaltstufen mit elektrischer Energie ist ein nach dem Prinzip eines Drehtransformators arbeitender Transformator 8 vorgesehen. Die Primärseite wird dabei mit elektrischer Energie versorgt, während die Sekundärseite über eine Aufbereitungsstufe 9 (Gleichrichter) und einen Regler 10 die Versorgung für die Schaltstufen durchschaltet. Eine Pufferbatterie 11 sichert dabei die Energieversorgung während des Stillstandes.

Wie aus Fig. 4 zu ersehen ist, werden die von den Beschleunigungaufnehmern 6,7 erzeugten Meßsignale über je einen Verstärker 12 jeweils zwei nachgeschalteten Signalaufbereitungsstufen 13,14 zugeführt. Hierbei ermitteln die Aufbereitungsstufen 13 die Amplitude während die Aufbereitungsstufen 14 die Phasenlage der Meßsignale ermitteln. Die in den Signalaufbereitungsstufen 13,14 aufbereiteten Signale werden dann als Eingangssignale einem Vierquadrantenmultiplizierer 15 eingegeben, der daraus ein resultierendes Ausgangssignal nach Größe und Richtung ermittelt. Das resultierende Ausgangssignal ist danach einem Rechenwerk 16 zugeführt das unter Berücksichtigung eines Kräfteparallelogramms für zwei Ausgleichsgewichte Ausgangsinformationen

- 6 -

0021037

nach Größe und Richtung für die beiden Ausgleichsgewichte errechnet. Für das Rechenwerk können vorteilhafterweise programmierbare Rechenwerke z.B.
Mikroprozessoren eingesetzt werden. Hierdurch ergibt sich der Vorteil, veränderliche Größen wie
Felgendurchmesser, Masse der Ausgleichsgewichte,
Ansprechschwelle usw. zu berücksichtigen, so daß
das benutzte Rechenwerk universell einsetzbar wird.

Zur Vermeidung von Fehlaussagen z.B. aufgrund von
Bordsteinen, Schlaglöchern, Kopfsteinpflaster usw.
wird die Ausgangsinformation des Rechenwerkes 16
über eine Torschaltung 17 der mit Leuchtdioden 27
bestückten Ringanzeigevorrichtung 5 zugeführt. Die
Torschaltung 17 und das Rechenwerk 16 werden durch
eine Koinzidenzstufe getaktet, die ihrerseits von
Signalen der Referenzfrequenz (Drehzahl) und den
über Aufbereitungsstufen geführten Meßsignalen angesteuert wird. Hierdurch werden die Meßsignale mit
dem Referenzsignal verglichen, was zur Folge hat,
daß nur periodisch wiederkehrende Meßsignale der Beschleunigungsaufnehmer ausgewertet werden. Das Signal der Referenzfrequenz wird dabei mit einem Tachogenerator 20 erzeugt und ebenfalls über eine Aufbereitungsstufe 21 der Koinzidenzstufe 18 zugeleitet.
Zur Sicherung der Anzeige während des Radstillstandes ist es zweckmäßig die mit Leuchtdioden bestückte
Ringanzeigevorrichtung 5 eingangsseitig mit einer
sogenannten "Sample and Hold"-Schaltung zu versehen.

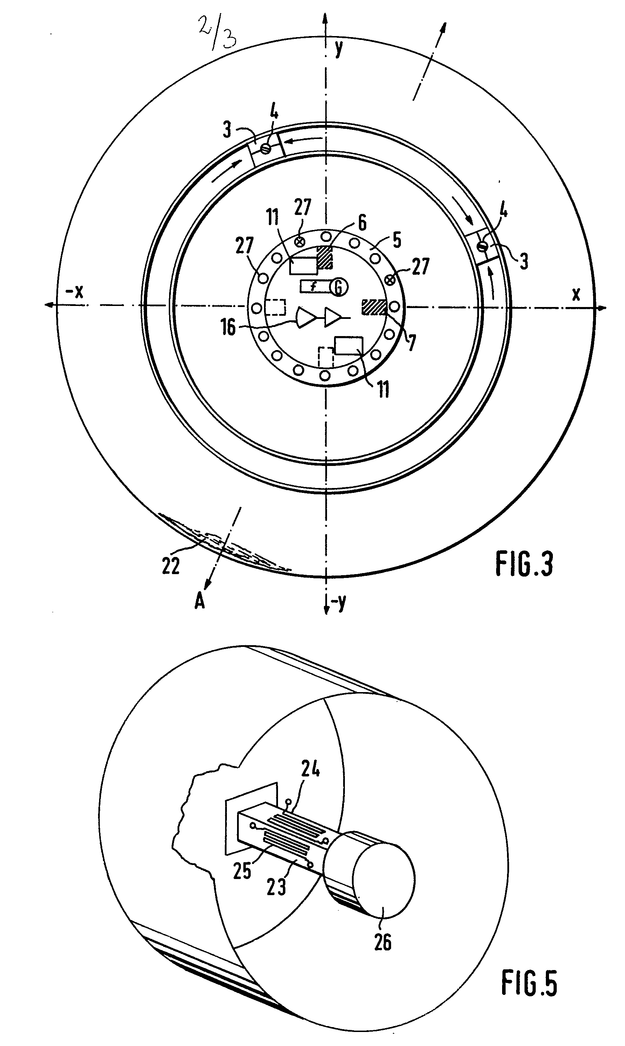

Wie in Fig. 3 angedeutet hat dort eine in Richtung A
auftretende Unwucht 22 Anzeigen bei zwei nahezu entgegengesetzt dazu liegenden Leuchtdioden 27 der Ringanzeigevorrichtung 5 zur Folge. Die resultierende
dieser beiden Anzeigen liegt diametral zur Richtung
A der Unwucht 22. Die resultierende dieser beiden

- 7 -

angesteuerten Leuchtdioden 27 stimmt mit Größe und
Richtung des resultierenden Ausgangssignals des Vierquadrantenmutiplizierers überein.

Als Beschleunigungsaufnehmer können auch Dehnungsmeßstreifen eingesetzt werden. Fig. 5 zeigt einen in
der Radachse angeordneten Federstab 23 auf dem zwei
zueinander um 90° versetzte Dehnungsmeßstreifen 24,25
aufgeklebt sind. Der Federstab 23 ist dabei an einem
freien Ende mit einer Zusatzmasse 26 zur Sicherung
brauchbarer Meßsignale versehen. Die Ausgangssignale
der Dehnungsmeßstreifen können der Auswerteschaltung
nach Fig. 4 anstelle der Meßsignale der Piezzokristalle
6,7 eingegeben werden.

Die zuvor beschriebene Unwuchtanzeigevorrichtung ist
zur Erfassung und Anzeige von Unwuchten von Rädern in
radialer Richtung vorgesehen. Zur Erfassung und Anzeige von Unwuchten in seitlicher Richtung kann die
erfindungsgemäße Vorrichtung ebenfalls benutzt werden.
Hierzu ist lediglich eine weitere Gebervorrichtung erforderlich, welche in seitlicher Richtung empfindliche
Meßaufnehmer beeinflußt.

0021037

Patentansprüche

1. Anordnung zur Anzeige und zum Einstellen von Ausgleichsgewichten zur Beseitigung von Unwuchten an Fahrzeugrädern, insbesondere für Räder von Kraftfahrzeugen, wobei jede Fahrzeugfelge mindestens eine umlaufende Nut zur Aufnahme von feststellbaren Ausgleichsgewichten aufweist, dadurch gekennzeichnet, daß jede umlaufende Nut (2) in axialer Richtung der Fahrzeugfelge (1) am Felgenaußenrand angeordnet ist und jeweils mindestens zwei Ausgleichsgewichte (3) in einer Nut (2) verschiebbar angeordnet und mit einer Feststellvorrichtung (4) versehen sind, wobei eine Unwuchtanzeigevorrichtung (5) der Fahrzeugfelge (1) derart zugeordnet ist, daß über Beschleunigungsaufnehmer (6,7) in Abhängigkeit von einer Unwucht (22) ein Meßsignal der Anzeigevorrichtung (5) zuführbar ist und die Ausgleichsgewichte (3) entsprechend nachführbar sind.

2. Anordnung nach Anspruch 1, dadurch gekennzeichnet, daß zwei an einer Felge um 90° zueinander versetzt und mit gleichem Achsabstand angeordnete richtungsempfindliche Beschleunigungsaufnehmer (6,7) in Abhängigkeit von einer Unwucht (22) ein positives bzw. negatives elektrisches Meßsignal erzeugen, welche zur Ermittlung und Anzeige von Größe und Richtung der aufgetretenen Unwucht einer Auswerteschaltung zugeführt sind.

3. Vorrichtung nach Anspruch 1 und 2, dadurch gekennzeichnet, daß die Meßsignale der zwei Beschleunigungsaufnehmer (6,7) über je einen Verstärker (12) jeweils zwei nachgeschalteten Signalaufbereitungsstufen (13,14) zugeführt sind und daß die in den

0021037

Signalaufbereitungsstufen (13,14) ermittelten Amplituden und Phasenlagen der Meßsignale als Eingangssignale einem Vierquadrantenmultiplizierer (15) zugeführt sind.

4. Vorrichtung nach Anspruch 1 bis 3, dadurch gekennzeichnet, daß der Vierquadrantenmultiplizierer (15) ein resultierendes Ausgangssignal nach Größe und Richtung aus den vier von den Meßsignalen abgeleiteten Eingangssignalen ermittelt und dieses Ausgangssignal einem programmierbaren Rechenwerk (16) vorzugsweise einem Mikroprozessor zuführt, welches aus dem zugeführten Signal eine Ausgangsinformation für zwei Ausgleichsgewichte (3) nach Größe und Richtung errechnet.

5. Vorrichtung nach einem der Ansprüche 1 bis 4, dadurch gekennzeichnet, daß die Ausgangsinformation des Rechenwerkes (16) über eine Torschaltung (17) einer Leuchtdiodenanzeigevorrichtung (5) zugeführt ist.

6. Vorrichtung nach einem der Ansprüche 1 bis 5, dadurch gekennzeichnet, daß das Rechenwerk (16) und die Torschaltung (17) durch eine Koinzidenzstufe (18) getaktet werden, die eingangsseitig mit Signalen der Referenzfrequenz und den Meßsignalen der Beschleunigungsaufnehmer (6,7) versorgt ist.

7. Vorrichtung nach einem der Ansprüche 1 bis 6, dadurch gekennzeichnet, daß der Leuchtdiodenanzeigevorrichtung (5) eingangsseitig eine sogenannte "Sample and Hold"-Schaltung zur Sicherung der Anzeige auch während des Radstillstandes zugeordnet ist.

8. Vorrichtung nach einem der Ansprüche 1 bis 7, dadurch gekennzeichnet, daß für die Beschleunigungsaufnehmer (6,7) Piezzokristalle eingesetzt sind.

9. Vorrichtung nach einem der Ansprüche 1 bis 7, dadurch gekennzeichnet, daß für die Beschleunigungsaufnehmer (6,7) zwei auf einem in der Radachse rotierenden Federstab (23) angeordnete Dehnungsmeßstreifen (24,25) vorgesehen sind.

10. Vorrichtung nach einem der Ansprüche 1 und 2, dadurch gekennzeichnet, daß zur Energieversorgung ein primärseitig mit Wechselstrom versorgter Drehtransformator (8) vorgesehen ist, dessen Sekundärseite über eine Aufbereitungsstufe (Gleichrichter) (9) und einen Regler (10) die Versorgung gewährleistet.

11. Vorrichtung nach einem der Ansprüche 1 und 2, dadurch gekennzeichnet, daß die Energieversorgung über eine Pufferbatterie (11) erfolgt.

1/3

FIG.1

FIG.2

0021037

2/3

FIG.3

FIG.5

FIG.4

3/3

## Europäisches Patentamt

# EUROPÄISCHER RECHERCHENBERICHT

0021037

Nummer der Anmeldung

EP 80 10 2805

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | US - A - 4 112 774 (J.R. CHADWICK) <br> * Ansprüche 17,24(e) und 24(f); Figuren 4,5,7 * | 1-5 | G 01 M 1/28 <br> 1/08 |
| | FR - A - 627 995 (COMPAGNIE D'APPLICATIONS MECANIQUES) <br> * Zusammenfassung; Figuren * | 1 | |
| | US - A - 3 965 752 (COMMODORE DAVIS) <br> * Zusammenfassung; Figuren * | 1 | RECHERCHIERTE SACHGEBIETE (Int. Cl. 3) |
| | DE - A - 1 648 336 (H.P. ANDERSEN ENGINEERING LTD.) <br> * Anspruch 6; Figur 1 * | 9 | G 01 M 1/08 <br> 1/20 <br> 1/22 <br> 1/28 <br> 1/36 <br> 1/38 |
| A | FR - A - 1 018 983 (L. HUNTER) <br> * Zusammenfassung; Figuren * | 1 | |
| A | FR - A - 1 417 881 (J.E. EDWARDS) <br> * Zusammenfassung; Figuren * | 1 | KATEGORIE DER GENANNTEN DOKUMENTE |

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent- familie, übereinstimmendes Dokument

Der vorliegende Recherchenbericht wurde für alle Patentansprüche erstellt.

| Recherchenort Den Haag | Abschlußdatum der Recherche 15-09-1980 | Prüfer VAN ASSCHE |
|---|---|---|

EPA form 1503.1 06.78